# FASCICULE DE BREVET EUROPEEN

(11) **EP 1 086 438 B1**
(45) Date de publication et mention de la délivrance du brevet: **22.05.2002**
(21) Numéro de dépôt: 99925123.4
(22) Date de dépôt: 17.06.1999
(51) Int. Cl.: G06K 7/08

(54) **SYSTEME DE LECTURE DE CARTES A PUCE UNIVERSEL**
LESESYSTEM FÜR UNIVERSALCHIPKARTEN
UNIVERSAL CHIP CARD READING SYSTEM

(30) Priorité: 19.06.1998 FR 9807757
(43) Date de publication de la demande: 28.03.2001
(73) Titulaire: FRANCE TELECOM, 75015 Paris (FR)
(72) Inventeur: GEOFFROY, Philippe, F-38600 Fontaine (FR); BALESTRO, Freddy, F-38700 La Tronche (FR); BOUVIER, Jacky, F-38240 Meylan (FR)
(74) Mandataire: Des Termes, Monique
(86) Numéro de dépôt international: FR9901458
(87) Numéro de publication internationale: WO9966447

(56) Documents cités:
- EP-A- 0 769 765
- FR-A- 2 622 330
- US-A- 5 451 763

## Description

### Domaine de l'invention

L'invention concerne un système de lecture de cartes à puce universel destiné à la lecture des cartes sans contact.

Elle trouve des applications dans tous les domaines nécessitant un échange d'informations prolongé entre la carte à puce et le lecteur de cartes et, en particulier, dans le domaine de la communication téléphonique.

### Etat de la technique

Il existe actuellement de nombreux types de cartes à puce et de nombreuses sortes de lecteurs de cartes adaptés chacun à un ou plusieurs types de cartes.

Il existe, en particulier, des cartes à lecture par contact entre la puce et le lecteur et des cartes à lecteur sans contact, nommées plus simplement « cartes sans contact ».

Les lecteurs de cartes sans contact sont classiquement des lecteurs à fente, c'est-à-dire des lecteurs comportant une fente dans laquelle la carte à puce doit être introduite selon une face et un sens bien particuliers. Si la carte n'est pas introduite selon la « bonne » face et selon le « bon » sens, la lecture de la puce est impossible.

Ces lecteurs à fente présentent donc une mauvaise ergonomie du point de vue de l'insertion de la carte, en particulier, pour les personnes malvoyantes.

En outre, le vandalisme sur ces lecteurs à fente est fréquent car la fente du lecteur est facile à obturer. Par contre, la maintenance d'un lecteur ainsi obstrué est coûteuse car elle nécessite un démontage complet de l'appareil.

Un système de lecture de cartes à puce ergonomique est décrit dans le brevet US-A-5 451 763. Ce système consiste en un lecteur de cartes à puces comportant un support en forme de cuvette, au fond duquel est placée la carte à puce à lire, ce support étant connecté par liaison filaire à une unité centrale. Ce système est réalisé pour des cartes à puce de forme trapézoïdale ou ronde. Il n'est pas destiné à la lecture de cartes de taille et de forme standard. De plus, ce système est dédié à des dispositifs non-intégrés, c'est-à-dire où le support recevant les cartes peut être éloigné des moyens de lecture.

### Exposé de l'invention

L'invention a justement pour but de résoudre les inconvénients de ces lecteurs de cartes. A cette fin, elle propose un système de lecture de cartes sans contact plus ergonomique et plus difficile à vandaliser que les lecteurs classiques.

Plus précisément, l'invention concerne un système de lecture tel que défini à la revendication 1.

Selon un mode de réalisation de l'invention, le fond du support comporte, en son centre, une ouverture par laquelle se fait l'échange de données entre les moyens d'échange et la puce, cette ouverture n'étant pas nécessairement débouchante.

Avantageusement, le support a des bords inclinés d'un angle supérieur à 90° par rapport au fond.

Les bords du support peuvent comporter une encoche de taille adaptée au passage d'un doigt d'un utilisateur sous le bord de la carte à puce.

Selon l'invention, le fond du support peut être circulaire ou rectangulaire

### Brève description des figures

La figure 1 représente schématiquement le système de l'invention selon un premier mode de réalisation du lecteur de cartes ; et
la figure 2 représente schématiquement le système de l'invention selon un second mode de réalisation du lecteur de cartes.

### Description détaillée de modes de réalisation de l'invention

L'invention concerne un système de lecture de cartes sans contact permettant une insertion simple et ergonomique de la carte dans le lecteur.

Ce système comprend au moins une carte à puce à lecture sans contact de taille standard et dont la puce est positionnée au centre géométrique de la carte de façon à la rendre totalement symétrique. Il comprend, de plus, un lecteur adapté à la lecture d'une telle carte sans contact.

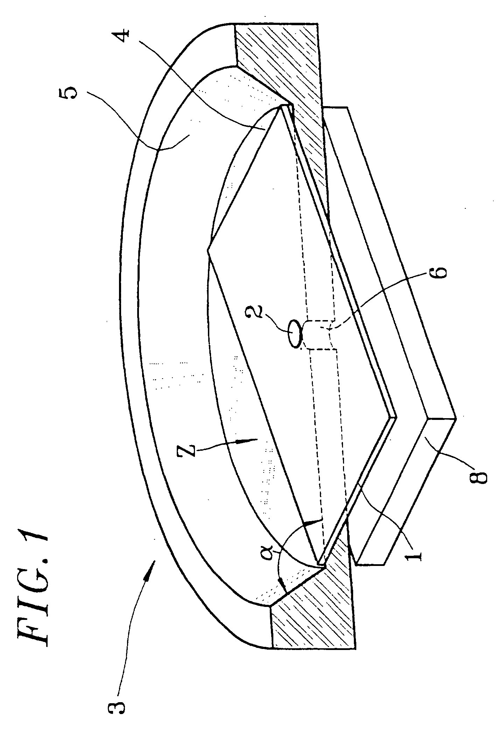

Sur la figure 1, on a représenté, en perspective, le support de cartes du lecteur de l'invention, conformément à un premier mode de réalisation.

Comme montré sur la figure 1, le support de carte 3 a une forme de cuvette dont le fond 4 est plat et les bords 5 inclinés par rapport à ce fond 4. Ce support de carte 3 est réalisé en un matériau non-conducteur et non-magnétique de façon à n'entraîner aucune perturbation du champ magnétique Radio Fréquence émis par les moyens d'échange du lecteur pour interroger la puce 2 de la carte à puce 1.

Les moyens d'échanges d'informations entre le lecteur et la puce 2 sont en effet placés sous le fond du support de carte 3 ; ces moyens d'échanges sont tout à fait classiques pour l'homme de l'art et ne sont donc pas décrits précisément dans la présente demande de brevet.

Dans le mode de réalisation représenté sur cette figure 1, le support 3 a une section ronde de diamètre égal à la longueur de la diagonale de la carte à puce, plus quelques dizièmes de millimètre.

Ainsi, en fonctionnement, la carte à puce 1 est déposée sur le fond 4 du support 3, dans n'importe quelle position, puisque la carte à puce est totalement symétrique.

Lorsque l'échange d'informations entre la carte 1 et le lecteur est terminé, l'utilisateur retire la carte 1 du support 3 grâce à la zone Z entre les bords de la carte et les bords du support.

Selon un mode de réalisation de l'invention, les bords 5 du support 3 sont inclinés d'un angle α supérieur à 90° par rapport au fond 4 du support. Cet angle α peut être, avantageusement, de 135°.

Cette inclinaison des bords 5 du support facilite le retrait de la carte. Elle assure, par ailleurs, un guidage de la carte, lors de son introduction dans le support 3, et une descente rapide de la carte vers le fond du support, par gravité.

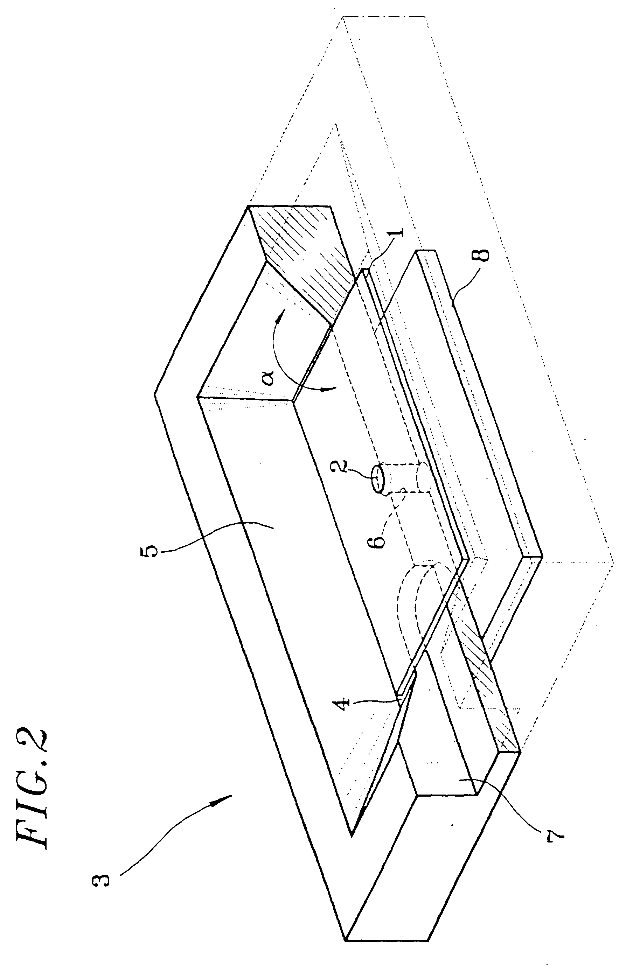

Sur la figure 2, on a représenté, en perspective, le support de cartes du lecteur de l'invention, conformément à un second mode de réalisation.

Dans ce mode de réalisation, le support de carte 3 a une section rectangulaire et son fond 4 a sensiblement la même taille que les cartes à puce de sorte que la précision de placement de la carte dans le support permette une lecture fiable.

Quelle que soit sa forme (circulaire ou rectangulaire), le support 3 peut comporter une encoche (référencée 7 sur la figure 2) qui permet à l'utilisateur de passer un doigt sous la carte, pour retirer ladite carte du support lorsque l'échange d'informations entre la puce et le lecteur est terminé.

En outre, cette encoche a pour rôle d'assurer l'écoulement des liquides qui pourraient éventuellement stagner dans le lecteur comme, par exemple, l'eau de pluie.

Dans le cas de carte à puce à bobine intégrée, selon un mode de réalisation de l'invention, le fond 4 du support 3 comporte une ouverture 6 (non nécessairement débouchante) placée en son centre et faisant face à la puce 2, pour permettre l'échange d'informations entre la puce et le lecteur. Les moyens d'échange d'informations sont situés au centre géométrique du support, et à faible distance sous le fond dudit support, par exemple à 0,5 mm.

Selon un second mode de réalisation, dans le cas de cartes à puce à bobine sur la carte ou sur le module, les moyens d'échange se situent juste sous le support, à une distance de quelques millimètres par rapport au fond 4 dudit support. Les dimensions de l'élément inducteur sont alors en rapport avec les dimensions des antennes sur les cartes.

Le système de lecture de cartes sans contact de l'invention a l'avantage d'être ergonomique puisque la carte peut être placée dans le support, dans n'importe quel sens et sur n'importe quelle face, la puce pouvant être lue aussi bien recto que verso.

Il présente aussi l'avantage d'être plus difficile à vandaliser que les systèmes classiques dans la mesure où il est plus difficile d'obstruer le support de ce lecteur que les fentes des lecteurs classiques. Par ailleurs, la maintenance du système de l'invention, en cas par exemple de vandalisme, est facilitée dans le sens où le lecteur est entièrement apparent.

## Revendications

1. Système de lecture de cartes à puce comportant au moins une carte à puce de type sans contact, et un lecteur de cartes comprenant un support de carte (3) en matériau non-conducteur et non-magnétique, ayant une forme de cuvette à fond plat, au fond duquel est déposée la carte à puce, **caractérisé en ce que** :
- la carte à puce est de taille et de forme rectangulaire standard, et la puce (2) de ladite carte et des moyens d'échange de données avec le lecteur sont positionnés uniquement au centre de la carte de sorte que ladite carte est totalement symétrique ; et
- le lecteur comporte des moyens d'échange de données (8), situés sous le fond du support, au centre du fond du support, et assurant les échanges de données avec la puce à travers le fond du support.

2. Système selon la revendication 1, **caractérisé en ce que** le fond du support comporte, en son centre, une ouverture (6) par laquelle se fait l'échange de données entre les moyens d'échange et la puce.

3. Système selon l'une quelconque des revendications 1 et 2, **caractérisé en ce que** le support a des bords (5) inclinés d'un angle (α) supérieur à 90° par rapport au fond.

4. Système selon l'une quelconque des revendications 1 à 3, **caractérisé en ce que** les bords (5) du support (3) comportent une encoche (7) de taille adaptée au passage d'un doigt d'un utilisateur sous le bord de la carte à puce.

5. Système selon l'une quelconque des revendications 1 à 4, **caractérisé en ce que** le fond du support est circulaire.

6. Système selon l'une quelconque des revendications 1 à 4, **caractérisé en ce que** le fond du support est rectangulaire.

## Claims

1. A chip card reading system having at least one contactless-type chip card, and a card reader comprising a card support (3) of non-conductive and non-magnetic material, having a flat bottomed bowl shape, at the bottom of which is placed the chip card, **characterized in that** the chip card is of a standard, rectangular shape and size and the chip (2) of said card and the means for exchanging data with the reader are solely positioned in the centre of the card, so that the card is completely symmetrical and the reader has data exchange means (8), located beneath the bottom of the support in the centre of the support bottom, ensuring data exchanges with the chip through the support bottom.

2. A system according to claim 1, **characterized in that** the bottom of the support includes, at its centre, an aperture (6) through which data exchange is performed between the exchange means and the chip.

3. A system according to any of claims 1 and 2, **characterized in that** the support has edges (5) inclined with an angle (α) greater than 90° with respect to the bottom.

4. A system according to any of claims 1 to 3, **characterized in that** the edges (5) of support (3) include a notch (7) with a suitable size for passing a user's finger under the edge of the chip card.

5. A system according to any of claims 1 to 4, **characterized in that** the bottom of the support is circular.

6. A system according to any of claims 1 to 4, **characterized in that** the bottom of the support is rectangular.

## Patentansprüche

1. Lesesystem für Chipkarten, wenigstens eine Chipkarte des kontaktlosen Typs umfassend und einen Kartenleser mit einem Kartenträger (3) aus einem nicht leitfähigen und unmagnetischen Material, der die Form einer Schale mit flachem Boden hat, auf dessen Boden die Karte abgelegt wird,
**dadurch gekennzeichnet, dass**:
- die Chipkarte die dem Standard entsprechende Größe und rechteckige Form aufweist und der Chip (2) der genannten Karte und Einrichtungen zum Austausch von Daten mit dem Leser sich nur im Zentrum der Karte befinden, so dass die genannte Karte vollkommen symmetrisch ist; und
- der Leser Einrichtungen zum Austausch von Daten (8) umfasst, die sich unter dem Boden des Trägers befinden, in der Mitte des Bodens des Trägers, und die die Datenaustausche mit dem Chip durch den Boden des Trägers hindurch sicherstellen.

2. System nach Anspruch 1, **dadurch gekennzeichnet, dass** der Boden des Trägers in seiner Mitte eine Öffnung (6) umfasst, durch die der Datenaustausch zwischen den Austauscheinrichtungen und dem Chip erfolgt.

3. System nach einem der Ansprüche 1 und 2, **dadurch gekennzeichnet, dass** der Träger Ränder (5) hat, die in Bezug auf den Boden um einen Winkel (α) geneigt sind, der größer ist als 90°.

4. System nach einem der Ansprüche 1 bis 3, **dadurch gekennzeichnet, dass** die Ränder (5) des Trägers (3) eine Aussparung (7) umfassen, deren Größe derartig ist, dass der Finger eines Benutzers unter dem Rand der Chipkarte hineingeschoben werden kann.

5. System nach einem der Ansprüche 1 bis 4, **dadurch gekennzeichnet, dass** der Boden des Trägers kreisförmig ist.

6. System nach einem der Ansprüche 1 bis 4, **dadurch gekennzeichnet, dass** der Boden des Trägers rechteckig ist.
